# EUROPEAN PATENT APPLICATION

(11) **EP 4 764 038 A2**
(43) Date of publication of application: **24.06.2026**
(21) Application number: 25223397.8
(22) Date of filing: 15.12.2025
(51) Int. Cl.: C25D 11/26, C25D 11/02, C25D 11/04, C25D 11/24

(54) **SYSTEMS AND METHODS FOR ACHIEVING LOW-RESISTIVITY OF DRY-FILM LUBRICATED SURFACES**

(30) Priority: 20.12.2024 US 202463737293 P
(71) Applicant: MacDonald, Dettwiler and Associates Inc., Brampton, Ontario L6Y 6K7 (CA)
(72) Inventor: DOWLING, Sean, Brampton, L6Y 6K7 (CA); HIEMSTRA, David Martin, Brampton, L6Y 6K7 (CA); MACMAHON, Sadhbh, Brampton, L6Y 6K7 (CA); MARSHALL, Rachel, Brampton, L6Y 6K7 (CA)
(74) Representative: Mewburn Ellis LLP

(57) **Abstract**

Provided are systems and methods for achieving low surface resistivity of a surface treated, dry-lubricated, electrically-conductive surface. A method includes providing a surface to be used in a space environment that is composed of an electrically conductive material, the surface including a first area and a second area, wherein the first area and the second area are contiguous, applying a surface treatment to the first area and leaving the second area of the surface untreated, wherein the surface treatment renders the first area non-conductive, and applying a dry-film lubricant over the first area and the second area, wherein the application of the dry-film lubricant over the first area and second area mitigates surface charging effects for the non-conductive first area.

## Description

### Technical Field

The following relates generally to the application of dry lubricant to electrically conductive substrates with non-conductive surface treatments, and more particularly to systems and methods for reducing the resistivity of said dry-film lubricated surfaces.

### Introduction

Dry-film lubricants use a dry substance or coating to reduce friction between two surfaces in situations where a liquid lubricant is not appropriate, for example, on metallic surfaces of a spacecraft. Application of dry-film lubricant on non-ferrous alloys often requires surface preparation including an anodization process. However, anodization results in an electrically non-dissipative surface, which leaves the surface susceptible to detrimental surface charging effects, particularly in high plasma-charging environments, such as those encountered for a spacecraft on-orbit.

Accordingly, there is a need for improved systems and methods for the application of dry-film lubricant that overcome the disadvantages of existing systems and methods.

### Summary

Provided herein is a method of preparing a lubricated surface for use in a space environment, the method includes providing a surface to be used in a space environment that is composed of an electrically conductive material, the surface including a first area and a second area, wherein the first area and the second area are contiguous, applying a surface treatment to the first area and leaving the second area of the surface untreated, wherein the surface treatment renders the first area non-conductive, and applying a dry-film lubricant over the first area and the second area, wherein the application of the dry-film lubricant over the first area and second area mitigates surface charging effects for the non-conductive first area.

The method may further comprise pre-processing at least one of the first area and the second area to prepare for application of the dry-film lubricant.

Applying the surface treatment to the first area and leaving the second area un-treated may further comprise applying masking to the surface, such that the second area is covered by the masking and the first area is uncovered, and, after applying the surface treatment to the first area, removing the masking from the second area.

The surface may comprise one of a non-ferrous metal or non-ferrous metal alloy.

The surface may comprise aluminum or aluminum alloy.

The surface may comprise titanium or titanium alloy.

The surface treatment may be anodizing the surface.

The dry-film lubricant may be a molybdenum disulfide-based lubricant.

The second area may be a single, continuous area.

The second area may comprise multiple areas adjacent to the first area.

The size of the second area and the amount of dry lubricant applied to the second area may be sufficient to remain below a surface resistivity threshold.

The space environment may be a plasma charging environment.

The space environment may be an orbit that traverses through one or more radiation belts.

The ratio of the area of first area to second area may be at least 10:1.

The second area may surround the first area.

The dry-film lubricant may be spread evenly across the first area and the second area.

Provided herein is a system for achieving low-resistivity of dry-film lubricated electrically conductive surfaces, the system including a first area, wherein the first area is a working area of an electrically-conductive surface of a first component which, in use, slides against a second component, wherein a surface treatment is applied to the first area for the application of a dry-film lubricant, and wherein the surface treatment renders the first area non-conductive, a second area, wherein the second area is a non-working area of the surface of the first component, wherein the second area is contiguous with the first area, and wherein the second area is not surface-treated, and the dry-film lubricant, wherein the dry-film lubricant coats the first area and the second area, wherein the dry-film lubricant on the second area mitigates surface charging effects resulting from the surface treatment of the first area by bleeding charge into the second area.

The surface may comprise one of a non-ferrous metal or non-ferrous metal alloy.

The surface may comprise one of aluminum and aluminum alloy.

The surface may comprise one of titanium and titanium alloy.

The surface treatment may be anodizing the surface.

The dry-film lubricant may be a molybdenum disulfide-based lubricant.

The second area may be a single, continuous area.

The second area may comprise multiple areas adjacent to the first area.

The size of the second area and the amount of dry lubricant applied to the second area may be sufficient to remain below a surface resistivity threshold.

The space environment may be a plasma charging environment.

The space environment may be an orbit that traverses through one or more radiation belts.

The ratio of the area of first area to second area may be at least 10:1.

The second area may surround the first area.

The dry-film lubricant may be spread evenly across the first area and the second area.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a surface with an anodized and lubricated first area and a lubricated second area, according to an embodiment;
Figure 2 is a flowchart of a method of partially anodizing and fully lubricating a surface, according to an embodiment;
Figure 3A is a schematic diagram of a surface, according to an embodiment;
Figure 3B is a schematic diagram of the surface of Figure 3A with masking applied, according to an embodiment;
Figure 3C is a schematic diagram of the surface of Figure 3B with anodization, according to an embodiment;
Figure 3D is a schematic diagram of the surface of Figure 3C with the masking removed, according to an embodiment;
Figure 3E is a schematic diagram of the surface of Figure 3D with dry-film lubricant applied, according to an embodiment; and
Figure 4 is a side-view schematic diagram of the surface of Figure 3E, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The following relates generally to application of dry-film lubricant, and more particularly to the application of dry-film lubricant over multiple finishes of a metallic surface to achieve low surface resistivity.

On a spacecraft, there are often surfaces which interact or rub against one another which necessitates the application of a dry-film lubricant to prevent metal-to-metal contact and to allow for a sliding motion between surfaces, thereby reducing friction and wear. The surfaces which interact are described herein as "working" or "functional" surfaces or areas. The surfaces are often aluminum or aluminum alloy surfaces, but may also be other metals, for example, titanium. The dry-film lubricant may be a molybdenum disulfide (MoS₂) based lubricant.

In current systems, dry-film lubricant is only applied to the working areas after the areas have been anodized. Anodization is a process to build up the oxide on the surface of some metals to provide corrosion protection, and serve as a base layer for the dry film lubricant to promote adhesion and wear resistance. However, as mentioned above, anodization of a surface results in an electrically non-dissipative surface. That is, anodization creates an insulated layer within which electrical charge can build up when the surface is hit with radiation. On a spacecraft in a high plasma-charging environment, for example geostationary orbit (GEO), near-rectilinear halo orbit (NHRO), the lunar environment, etc., the charge build up would be detrimental if the charge buildup cannot be bled from the surface, as arcing could occur which may result in pitting of the surface.

Provided herein are systems and methods for achieving low resistivity by application of a dry-film lubricant to both a surface-treated working area of an electrically-conductive surface of interest as well as an area adjacent to and contiguous with the working area. The surface treatment of the working area is necessary for the application of dry-film lubricant but results in the working area being non-conductive and, therefore, non-dissipative. The application of the dry-film lubricant to the non-working area allows for bleeding of built-up charge from the non-dissipative working area into non-working area which is still electrically-conductive. The size of the non-working area may be determined using a specific ratio of working area to non-working area which allows for mitigation of surface charging effects, such that the surface of interest can remain below a differential voltage threshold of concern.

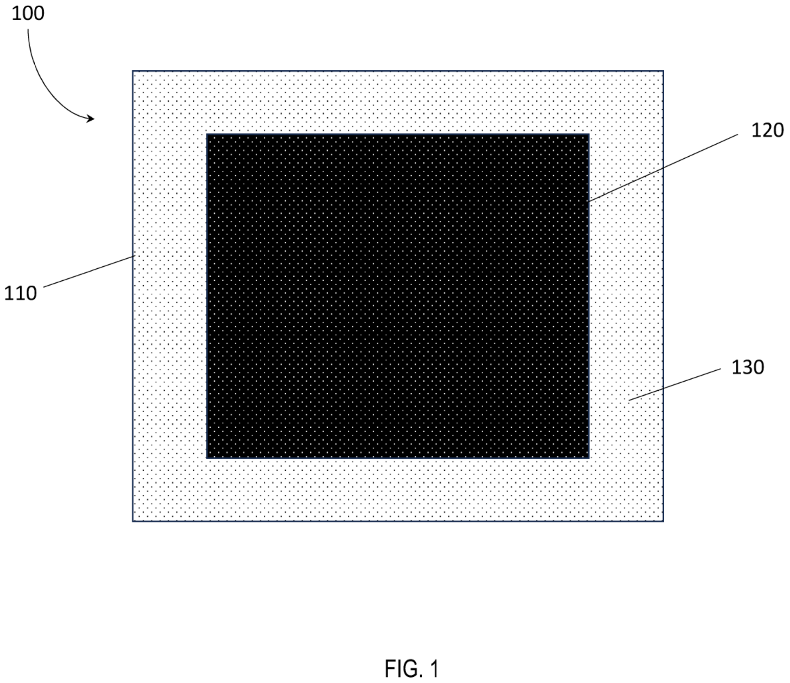

Referring now to Figure 1, shown therein is a schematic diagram of a surface of interest 100 with an anodized and lubricated first area 120 and a lubricated second area 130, according to an embodiment.

The surface 100 may be a surface of a component of a spacecraft. The surface is a metallic surface. The metal may be aluminum or aluminum alloy, titanium or titanium alloy, or other non-ferrous metal or non-ferrous metal alloy.

While the surface 100 has been presented as rectangular in Figure 1, this is only an example and any shape or size of surface could be the surface of interest for applying a dry-film lubricant.

The overall surface 110 is divided into the first area 120 and the second area 130.

The first area 120 is a functional area of the surface 110 which slides against or otherwise directly interacts with a surface on another component.

The first area 120 is anodized (represented as black color) and dry-film lubricated (represented by dotting).

The second area 130 is a non-functional area which does not slide against or otherwise interact with a surface of another component in a way which necessitates a dry-film lubricant to minimize friction.

The second area is not anodized (represented by white color) but is dry-film lubricated (represented by dotting).

The dry-film lubricant is applied over the entire surface 110, following anodization of the first area 120.

The dry-film lubricant may be a MoS₂-based lubricant.

The second area 130 may require pre-processing to allow for the successful application of the dry-film lubricant and for maintenance of the surface. The need for pre-processing or the specifics of the pre-processing process may depend on the material of the surface 110 and specific dry film lubricant used.

Depending on the characteristics of the surface and the use case (e.g., the orbit in which the spacecraft is deployed), a specific ratio of the size of first area 120 to the size of second area 130 is determined. The specific ratio is the ratio at which any negative effects of surface charge build-up are mitigated such that the surface 100 can remain below a differential voltage threshold of concern. As an example, the ratio may be 10:1 for the first area to the second area. That is, the un-anodized area may be a tenth of the size of the anodized area.

In the embodiment of Figure 1, the second area 130 surrounds the first area 110 and allows for bleeding off electrical charge build-up from the first area 120 into the metal of the second area 130 through the dry-film lubricant.

In other embodiments, the second area may not be a single, continuous area but may comprise multiple areas adjacent to the first area.

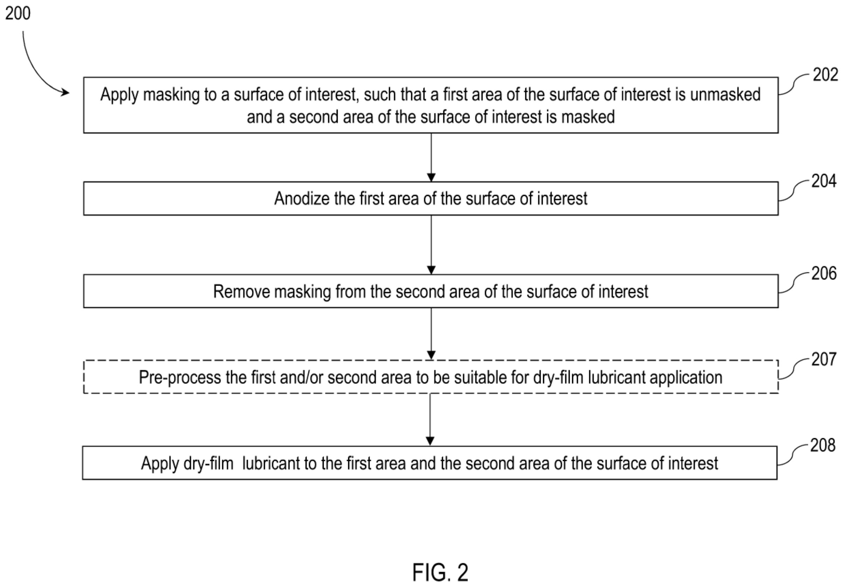

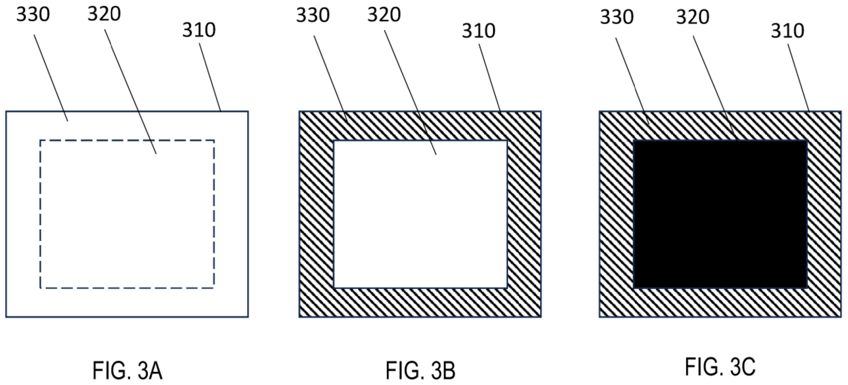

The steps for anodization and application of the dry-film lubricant as shown in Figure 1, are described and shown in Figures 2 and 3A-3E.

Figure 2 is a flowchart of a method of partially anodizing and fully lubricating a surface, such as surface 100, according to an embodiment.

At 202, masking is applied to a surface of interest such that a first area of the surface of interest remains unmasked and a second area of the surface of interest is covered by masking. The surface of interest is on a component which slides against or abuts another component. The first area is a functional area which slides against or otherwise interacts with a surface of the other component and therefore requires the application of dry-film lubricant. The second area does not slide against or interact with another component and therefore does not require a dry-film lubricant for reducing friction, however herein the dry-film lubricant is applied to the second area for charge dissipation purposes.

The masking must be removable and compatible with the anodizing process. The masking may be any suitable material which enables the first area to be anodized while the second area is not anodized.

At 204, the first area is anodized to prepare the surface for the application of dry-film lubricant.

In some embodiments, the first area may require pre-processing, such as chemical etching, before anodizing occurs.

At 206, the masking is removed from the second area of the surface of interest.

At 207, the first and/or second area may require non-anodizing pre-processing for the application of the dry-film lubricant and/or for maintenance of the surface. That is, depending on the material of the surface of interest and specific chemical formulation of the dry-film lubricant used, the first and/or second area may require pre-processing to enable adequate adherence of the dry-film lubricant to the surface.

As described above, anodizing is required to enable adequate application of dry-film lubricant to a metallic surface for the purpose of reducing friction between two surfaces. But the requirements for adequate application of dry-film lubricant for the purpose of bleeding built off charge are not the same. That is, application of dry-film lubricant for bleeding charge does not need to rise to the same standard as application for reducing friction. Therefore, in particular, pre-processing of the second area may be required to achieve application of dry-film.

The non-anodizing pre-processing may include basic pre-processing as would be known in the art such as machining, cleaning, or grit blasting the surface. Additionally, a chromate conversion coating may be added to an aluminum surface to protect against corrosion where anodization is not present.

At 208, dry-film lubricant is applied over the entire surface of interest, covering both the first area and the second area.

In other embodiments, masking may be applied to areas adjacent to the area of interest to prevent the application of dry-film lubricant to areas which are not the first area or the second area. That is, masking may be applied so that only the working area and a charge bleeding area (as determined using a specific ratio which depends on the size of the working area and the working environment) are covered by dry-film lubricant.

Figures 3A through 3E show an example surface of interest throughout the method of application as described in Figure 2.

Figure 3A is a schematic diagram of a surface 310. The surface 310 is on a component which slides against or abuts another component. A first area 320 (inside the dashed lines) of the surface 310 is a functional area which slides against or otherwise interacts with a surface of another component and therefore requires the application of dry-film lubricant. A second area 330 of the surface 310 does not slide against or interact with another component and therefore does not require a dry-film lubricant for friction, however, herein the dry-film lubricant is applied to the second area for charge dissipation purposes.

Figure 3B is a schematic diagram of the surface 310 wherein masking (represented by diagonal lines) is applied to the second area 330. As described in Figure 2, the masking may be any removable material which is suited to preventing anodizing of the second area 330 while allowing anodizing of the first area 320.

Figure 3C is a schematic diagram of the surface 310 of Figure 3B wherein the first area 320 has been anodized (represented by black) and the second area 330 is still covered by masking.

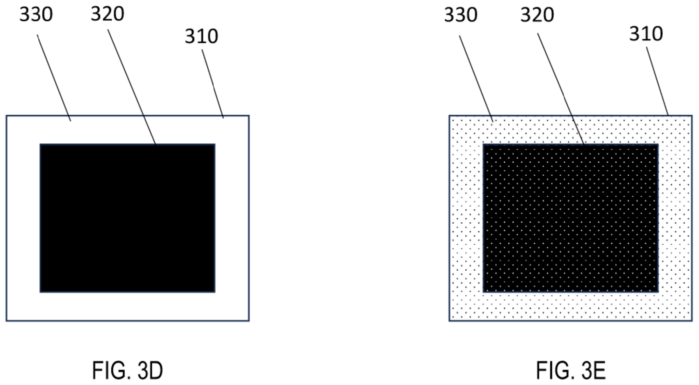

Figure 3D is a schematic diagram of the surface 310 of Figure 3C with the masking removed from the second area 330.

Figure 3E is a schematic diagram of the surface 310 of Figure 3D with dry-film lubricant applied (represented by dots) over both the first area 320 and the second area 330.

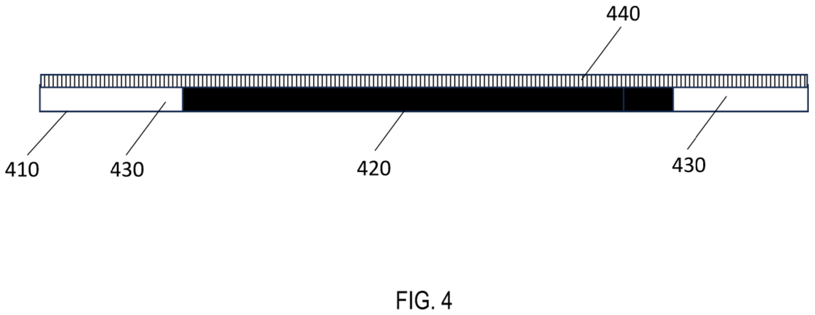

Figure 4 is a side-view schematic diagram of a surface of interest 410 with anodization and application of dry-film lubricant.

Figure 4 is similar or identical to the surface 310 of Figure 3E.

Figure 4 shows the surface of interest 410 with a first area 420 which is anodized and a second area 430 (shown as two parts on either side of the first area 420) which is not anodized. Both the first area 420 and the second area 430 are coated with dry-film lubricant 440.

While the above description provides examples of one or more apparatus, methods, or systems, it will be appreciated that other apparatus, methods, or systems may be within the scope of the claims as interpreted by one of skill in the art.

## Claims

1. A method of preparing a lubricated surface for use in a space environment, the method comprising:
providing a surface to be used in a space environment that is composed of an electrically conductive material, the surface including a first area and a second area, wherein the first area and the second area are contiguous;
applying a surface treatment to the first area and leaving the second area of the surface untreated, wherein the surface treatment renders the first area non-conductive; and
applying a dry-film lubricant over the first area and the second area, wherein the application of the dry-film lubricant over the first area and second area mitigates surface charging effects for the non-conductive first area.

2. The method of claim 1 further comprising pre-processing at least one of the first area and the second area to prepare for application of the dry-film lubricant.

3. The method of claim 1 or 2 wherein applying the surface treatment to the first area and leaving the second area un-treated further comprises:
applying masking to the surface, such that the second area is covered by the masking and the first area is uncovered; and
after applying the surface treatment to the first area, removing the masking from the second area.

4. The method of any one of claims 1 to 3 wherein the surface comprises one of: a non-ferrous metal, a non-ferrous metal alloy, aluminum, an aluminum alloy, titanium, and a titanium alloy.

5. The method of any one of claims 1 to 4 wherein the surface treatment is anodizing the surface.

6. The method of any one of claims 1 to 5 wherein the size of the second area and the amount of dry-film lubricant applied to the second area is sufficient to remain below a surface resistivity threshold.

7. The method of any one of claims 1 to 6 wherein the second area surrounds the first area.

8. The method of any one of claims 1 to 7 wherein the dry-film lubricant is spread evenly across the first area and the second area.

9. A system for achieving low-resistivity of dry-film lubricated electrically conductive surfaces with non-conductive surface treatments, the system comprising:
a first area, wherein the first area is a working area of an electrically conductive surface of a first component which, in use, slides against a second component, wherein a surface treatment is applied to the first area for the application of a dry-film lubricant, and wherein the surface treatment renders the first area non-conductive;
a second area, wherein the second area is a non-working area of the surface of the first component, wherein the second area is contiguous with the first area, and wherein the second area is not surface-treated; and
the dry-film lubricant, wherein the dry-film lubricant coats the first area and the second area, wherein the dry-film lubricant on the second area mitigates surface charging effects resulting from the surface treatment of the first area by bleeding charge into the second area.

10. The system of claim 9 wherein the surface comprises one of: a non-ferrous metal, a non-ferrous metal alloy, aluminum, an aluminum alloy, titanium, and a titanium alloy.

11. The system of claim 9 or 10 wherein the surface treatment is anodizing the surface.

12. The system of any one of claims 9 to 11 wherein the second area is a single, continuous area.

13. The system of any one of claims 9 to 11 wherein the second area comprises multiple areas adjacent to the first area.

14. The system of any one of claims 9 to 13 wherein the size of the second area and the amount of dry-film lubricant applied to the second area is sufficient to remain below a surface resistivity threshold.

15. The system of any one of claims 9 to 14 wherein the second area surrounds the first area.
